(19) Europäisches Patentamt
European Patent Office
Office européen des brevets

(11) **EP 0 507 957 B1**

(12) **EUROPEAN PATENT SPECIFICATION**

(45) Date of publication and mention
of the grant of the patent:
**08.05.1996 Bulletin 1996/19**

(51) Int Cl.6: **G01G 11/00**, G01G 23/37,
G01G 11/12

(21) Application number: **91917840.0**

(22) Date of filing: **21.10.1991**

(86) International application number:
**PCT/JP91/01447**

(87) International publication number:
**WO 92/08111 (14.05.1992 Gazette 1992/11)**

(54) **Check weighers considering length**

Kontrollwaagen mit Längenberücksichtigung

Balances de contrôle tenant compte de la longeur

(84) Designated Contracting States:
**DE ES FR GB IT**

(30) Priority: **30.10.1990 JP 293174/90**
**25.02.1991 JP 141160/91**
**25.02.1991 JP 141161/91**

(43) Date of publication of application:
**14.10.1992 Bulletin 1992/42**

(73) Proprietor: **ISHIDA CO., Ltd.**
**Kyoto-shi (JP)**

(72) Inventor: **TOKUTSU, Harunori**
**Otsu-shi, Shiga 520 (JP)**

(74) Representative: **Tiedtke, Harro, Dipl.-Ing. et al**
**Patentanwaltsbüro**
**Tiedtke-Bühling-Kinne & Partner**
**Bavariaring 4**
**80336 München (DE)**

(56) References cited:
GB-A- 2 214 646      JP-A- 2 206 726
JP-A- 3 021 826      JP-A-61 132 826
JP-A-63 309 823      JP-U-59 056 529

# Description

## Field of Technology

This invention relates to weighing machines of a kind having a conveyor belt supported by a load cell for measuring the weight of a target object while receiving it from a feed-in conveyor belt and transporting it onto a discharge conveyor belt.

## Background of the Invention

For measuring the weight of a target object such as a product which has been weighed and packaged, it has been known to make use of a weighing conveyor with a conveyor belt supported by a load cell serving as a weight detecting means. At one end of the weighing conveyor is a feed-in conveyor belt from which a packaged product is delivered. After its weight is measured, it is discharged onto a discharge conveyor belt and, if necessary, a selection mechanism is activated.

One of the problems associated with prior art weighing machines of this type has been that the result of measurement was affected by the length of the target object in the direction of its transportation (hereinafter simply referred to as its length). In what follows, this problem will be discussed from three practical points of view.

Firstly, since a conveyor belt is supported by the weight detecting means, the weight detecting means is subjected to the vibrations of the conveyor, and the oscillatory load from the conveyor belt is added to the weight of the target object. As a result, a correct weight value cannot be obtained by a direct measurement. For this reason, output signals from the weight detecting means are passed through a low pass filter for removing the components with relatively high frequencies caused by the aforementioned vibrations.

Since a low pass filter has an extremely large time constant, however, a stable output therefrom cannot be obtained until a certain length of time elapses after a target object is brought onto the weighing conveyor. In the case of a target object which is elongated in the direction of its transportation, the object can remain on the conveyor only for a short time, and an error is likely to occur in the measurement.

In view of the problems of this type, Japanese Patent Publication Tokkai 60-79227 disclosed a weighing machine having a speed detector for the weighing conveyor such that the frequency band of the low pass filter can be adjusted according to the speed signal outputted from the speed detector. Such a weighing machine is capable of selecting an optimum frequency band for a given speed of the weighing conveyor, but there still remains the problem of measurement errors when the length of the target object is changed.

Secondly, since an error is more likely to occur in the measurement of a target object which is long, a method has been considered whereby weight data are prevented from being taken between the time when the target object reaches the weighing conveyor and the later time when the low pass filter begins to output stable weight data. In other words, a detector for the target object is provided on the object-receiving side of the weighing conveyor, and data are taken with reference to the detection signals from this detector. Such a detector usually comprises a light-emitting element and a light-receiving element placed near the weighing conveyor such that the reflected light from the target object or the screening of the light may be detected. Thus, a single target object may happen to screen the light twice, for example, if its top surface has protrusions and indentations, and the outputted signals may indicate that two objects have passed by. This will cause an error in establishing the reference time for data processing and result in incorrect measurements.

In order to overcome this difficulty, it has been known to enter from a data input means, such as a keyboard, a so-called detection inhibiting time period during which, after a detection signal is outputted from the target object detector, signals from this detector are prevented from being accepted.

If the length of the target object or the conveyor speed changes, however, a new value of the detection inhibiting time period must be determined by measuring the length of the target object and dividing it by the belt speed, and the value thus determined must be entered through the keyboard.

Thirdly, a weighing machine of this type keeps determining an initial load such as the weight of the conveyor, even when it is not loaded with any target object to be weighed. When there is no target object, such an initial load is stored as the zero-point value, and the true weight of a target object is obtained by subtracting this zero-point value from the measured weight value. For this reason, it is extremely important to detect a no-load condition for a weighing machine of this type, and many methods for this purpose have been considered such as the method of monitoring the waveform of the signals from the weight detecting means in order to detect a no-load condition or that of using a timer to preliminarily set a time interval during which a no-load condition will be established.

According to the former method, a zero-point adjustment circuit is activated after a no-load condition is detected. Thus, there is a time delay between the detection of a no-load condition and the actual start of zero-point adjustment, and this gives rise to a problem of reduced operating efficiency. By the latter method, on the other hand, the user cannot adjust to changes in the length of the target object or in the belt speed of the weighing conveyor. Thus, the timer would be set for a longer period than necessary in order to be on the safer side, and this also results in wasted time. In summary, there always remained a problem of reduced work efficiency for the weighing machine because of the waste of time between when a zero-point adjustment becomes possible and when an automatic zero-point adjustment is actually started.

The present invention is for the purpose of eliminating these problems and its object is to provide a weighing machine of which the operation is not affected by changes in the length of the target object.

## SUMMARY OF THE INVENTION

In order to accomplish the above and other objects by automatically setting optimum filter characteristics independent of the speed of the weighing conveyor or the length of the target object, a weighing machine embodying the present invention is given with claim 1. The data processing condition setting means is for calculating optimum filtering conditions on the basis of the belt speed and the length of the target object. The digital filter means is adapted to receive a control signal from the data processing condition setting means and to thereby digitally filter weight signals from the weight detecting means.

If the belt speed of the weighing conveyor and the length of the target object are preliminarily inputted through the data inputting means, optimum conditions for the digital filter means are automatically set by the data processing condition setting means, and the digital filter means functions under these conditions. In short, highly reliable weight data can be obtained independent of the length of the target object.

According to a preferred embodiment of the invention, the data processing condition setting means is provided with thinning factor calculating means for calculating a thinning factor for weight signals at the digital filter means. Such a thinning factor is used by the digital filter means in eliminating high-frequency components in weight signals such that highly reliable weight data can be obtained independent of the measurement frequency of the weight detecting means.

According to another preferred embodiment of the invention, the aforementioned thinning factor calculating means calculates a thinning factor on the basis of the difference between the detection inhibiting time during which a target object is completely transferred from the feed-in conveyor onto the weighing conveyor and the object transportation time during which the target object is transported by the weighing conveyor, and also of the number of necessary weight data outputted from the weight detecting means. In other words, the time during which the whole of the target object is being carried by the weighing conveyor is obtained from the difference between the object transportation time and the detection inhibiting time, and the thinning factor is calculated on the basis of this time period and the number of necessary weight data. Thus, the digital filter means eliminates high-frequency components of weight signals by using the largest thinning factor that can be set. Accordingly, high-frequency components can be eliminated with improved efficiency.

In order to attain the aforementioned objects by automatically setting a detection inhibiting time on the basis of an inputted length value of the target object, a weighing machine according to the present invention is given with claim 5. The detection inhibiting time calculating means is for calculating, on the basis of the inputted length value of the target object and the set belt speed, a transportation time corresponding to the length of the target object as the detection inhibiting time period. The detection inhibiting means serves to cause the detection signals from the object detecting means to be ignored until the aforementioned detection inhibiting time elapses from the time when the front end of the target object is detected by the object detecting means.

When the data inputting means of a weighing machine thus structured sets a length value of a target object, a corresponding transportation time is calculated from the belt speed which is preliminarily set and this length value, and this is accepted as the detection inhibiting time. Accordingly, the detection inhibiting time for ignoring the quasi-signals associated with the ON-OFF operations of the object detecting means is automatically set. Thus, there is no longer the need to calculate a new detection inhibiting time whenever the length of the target object is changed. As a result, the weighing operation can be simplified, the possibility of an error in setting a detection inhibiting time can be reduced to a minimum, and the reliability of measurement can be improved.

In order to attain the aforementioned objects of the invention by automatically setting a detection inhibiting time by transporting a target object just once, a weighing machine according to another embodiment of the present invention may include a weighing conveyor, an object detecting means as described above, means for measuring the output time of detection signals from the detecting means when a target object is transported onto the weighing conveyor and storing this output time as the detection inhibiting time corresponding to the length of the target object, and a detection inhibiting means as described above. When a target object is sent onto the weighing conveyor in a registration mode of operation of such a weighing machine, it is detected by the object detecting means and a detection signal is outputted. The output time of this detection signal is measured and the transportation time corresponding to the length of the target object is thereby determined and automatically set as the detection inhibiting time. When detection signals are outputted thereafter from the object detecting means in a weighing mode of operation, these signals are ignored from this time on until the aforementioned detection inhibiting time has elapsed. In this manner, signals can be processed with high reliability after the front end of a target object is detected with certainty.

Since the length of the target object is automatically measured while it is being transported and the detection inhibiting time is thereby determined, a weighing machine according to this embodiment of the invention does not require the input of any data from a keyboard and hence can measure the weights of target objects efficiently even when their lengths vary frequently.

In order to attain the aforementioned objects of the invention by automatically setting an automatic zero-point adjustment inhibiting time corresponding to the length of a target object and to thereby prevent the occurrence of wasteful free time, a weighing machine according to still another embodiment of the present invention includes a weighing conveyor, a data processing condition setting means for calculating optimum filtering conditions from the belt speed of this weighing conveyor and the length of the target object, a digital filter means for receiving a control signal from this data processing condition setting means to thereby digitally filter weight signals from weight detecting means, and an automatic zero-point adjustment inhibiting time calculating means for calculating a zero-point adjustment inhibiting time on the basis of the length and the belt speed of the weighing conveyor, the length of the target object in the direction of its transportation and the filtering conditions.

With a weighing machine according to this embodiment, since optimum filtering conditions for its digital filter are set from the belt speed and the length of the target object, and the digital filter is operated under such optimum conditions, it is possible to obtain weight data which may be considered most dependable corresponding to the lengths of the target objects and the belt speed.

Moreover, zero-point adjustment is inhibited for a certain period of time from the time when a target object is transported onto the weighing conveyor, this period of time corresponding to the sum of a loading time determined by the belt speed, the length of the weighing conveyor and the length of the target object, and a filter response time determined by the filtering conditions. As a result, a zero-point adjustment process can be initiated as soon as the weighing conveyor stabilizes under a no-load condition. In other words, zero-point adjustment can be effected efficiently without wasting any free time after a stable no-load condition is established and, since there are increased opportunities for a zero-point adjustment, corrections can be effected corresponding to changes in the length of target objects and weighing operations can be effected with high accuracies.

Brief Description of the Drawings

Fig. 1 is a schematic structural diagram of a weighing machine according to a first embodiment of the present invention.

Fig. 2 is a block diagram showing the structure of a digital filter.

Fig. 3 is a block diagram showing the functions of the control device of Fig. 1.

Fig. 4 is a side view of the weighing conveyor for showing how the transportation time for a target object is converted into and represented as a distance.

Fig. 5 is a schematic diagram showing the operation of the digital filter.

Fig. 6 is a schematic structural diagram of a weighing machine according to a second embodiment of the present invention.

Fig. 7 is a block diagram showing the functions of the control device.

Fig. 8 is a side view of the weighing conveyor for showing the detection inhibiting time, zero-point adjustment inhibiting time and the like as distances.

Fig. 9 is a block diagram of a portion of a weighing machine according to a third embodiment of the present invention.

Detailed Description of the Invention

In what follows, the present invention will be described by way of examples with the help of the drawings.

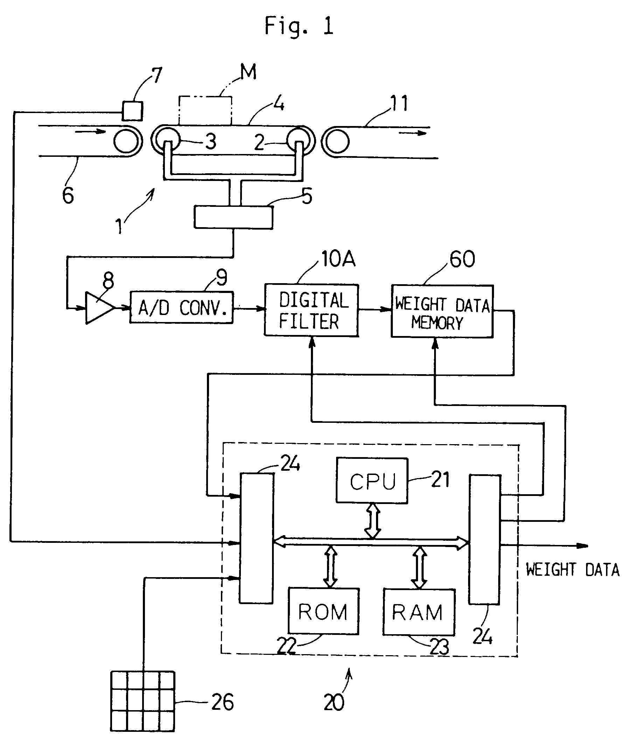

With reference to Figs. 1-5 which describe a weighing machine according to a first embodiment of the invention, its weighing conveyor 1 includes a conveyor belt 4 which is stretched between a drive roller 2 connected to a motor (not shown) and an idler roller 3 and is supported by a load cell 5 serving as a weight detecting means. The weight of a target object M, which is transported onto the weighing conveyor 1 from a feed-in conveyor belt 6, is measured according to a timing schedule to be described below and is judged either acceptable or unacceptable in view of a target weight value. If it is adjudged unacceptable, it is discarded by a sorting means (not shown) disposed at a downstream location. If it is adjudged acceptable, it passes through the sorting means and is transported to the downstream side by means of a discharge conveyor 11.

On the receiving side of the weighing conveyor 1, there is an object detector 7 for optically detecting the presence of a target object M transported by the feed-in conveyor belt 6. The object detector 7 is composed of an optical sensor of the transmissive or reflective type, having a light-emitting element and a light-receiving element such that a detection signal will be transmitted if detection light emitted from the light-emitting element is blocked by the target object M and fails to be received by the light-receiving element.

The load cell 5 is adapted to output a measured weight value as an analog signal. The analog signal outputted from the load cell 5 passes through a preamplifier 8 and is received by an analog-to-digital converter 9. The digital signal outputted from the analog-to-digital converter 9 is transmitted to a digital filter 10A, which is so structured as to extract a direct current component as a weight signal from the received digital signal.

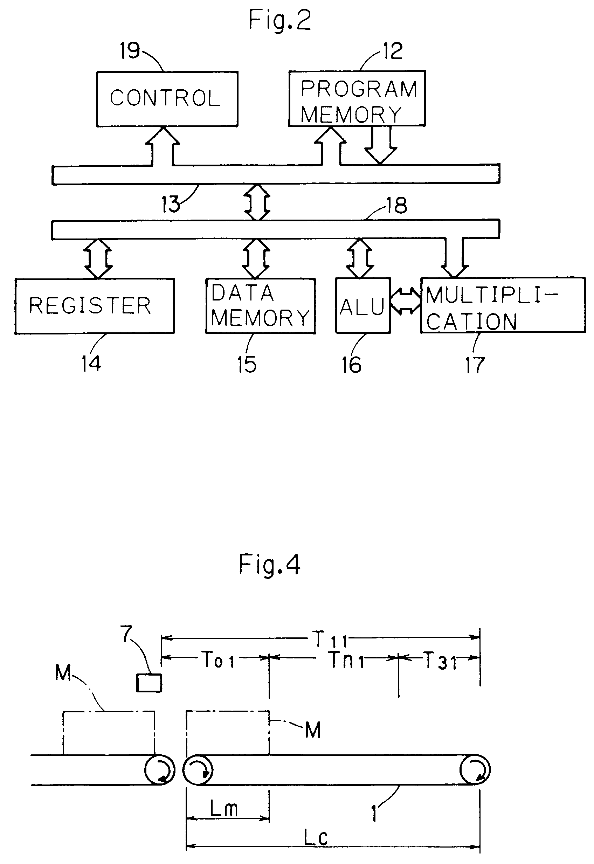

As shown in Fig. 2, the digital filter 10A has its control unit 19 and program memory 12 connected to each other through a program bus 13, and a register 14, a data memory 15, an arithmetic and logic operation unit (ALU) 16 and a multiplication unit 17 connected together through a data bus 18 such that the take-in time for filter constants and the weight signal can be freely set by means of a control device 20 to be described below.

With reference again to Fig. 1, the control device 20 is composed of a microcomputer having a central processing unit (CPU) 21, a read-only memory (ROM) 22, a random-access memory (RAM) 23 and interface circuits 24. The control device 20 is adapted to receive data from the object detector 7 and a keyboard 26 (serving as a data inputting means for inputting various constants), and also weight data from a weight data memory circuit 60 to be described below. The control device 20 is also programmed to output filter constants to the digital filter 10A or weight data which, after the weight of a target object has been measured, may be believed the most trustworthy. The weight data memory circuit 60 stores a plurality of weight data outputted from the digital filter 10A.

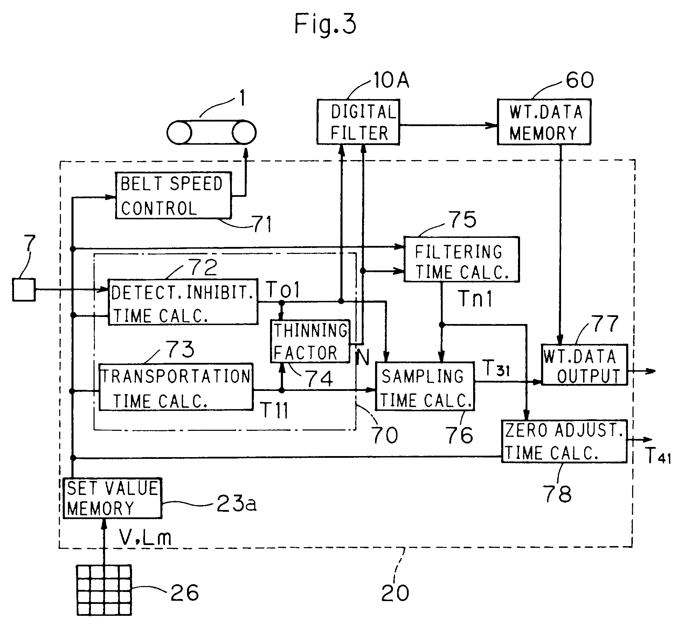

Fig. 3 shows the functions of the microcomputer of which the control device 20 is composed, and the control device 20 is programmed as follows.

In Fig. 3, numeral 23a indicates a set value memory means which forms a part of the RAM 23 (shown in Fig. 1) and serves to store inputted values of the belt speed V and the length $L_m$ of a target object received from the keyboard 26. The speed of the weighing conveyor 1 is controlled by a belt speed control means 71 so as to be equal to the set value V according to the data stored in the set value memory means 23a.

Numeral 72 indicates a detection inhibiting time calculating means for calculating detection inhibiting time $T_{01}$ from the belt speed V and the length $L_m$ of the target object according to Equation (1) given as follows:

$$T_{01} = (1/2)\{(L_m/V) + (L_m/V_{fc})\} \qquad \text{Eq. (1)}$$

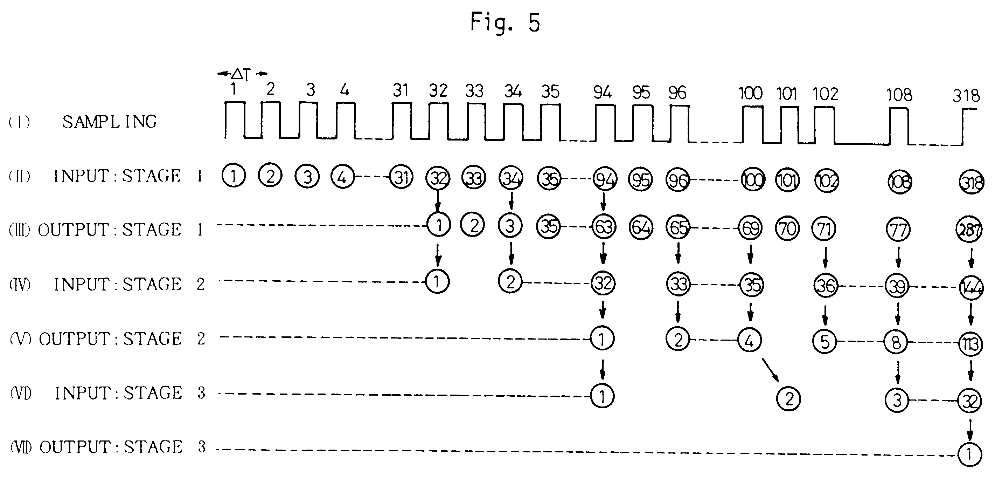

where $V_{fc}$ is the speed of the feed-in conveyer belt 6 and the detection inhibiting time $T_{01}$ is defined, as illustrated in Fig. 4, as the time interval from when a detection signal is outputted from the object detector 7 until the target object is completely on the weighing conveyor 1.

Numeral 73 indicates an object transportation time calculating means for calculating object transportation time $T_{11}$ from the belt speed V and the length $L_m$ of the target object according to Equation (2) given as follows:

$$T_{11} = \{(L_c - L_m)/V\} + T_{01} \qquad \text{Eq. (2)}$$

where $L_c$ is the length of the weighing conveyor 1 and the object transportation time $T_{11}$ is defined, as also illustrated in Fig. 4, as the time interval from when the target object M reaches the object detector 7 until the front end of the target object M reaches the distal end of the weighing conveyor 1 away from the feed-in conveyor belt 6.

Numeral 74 indicates a thinning factor calculating means for calculating what is herein referred to as a thinning factor N from the detection inhibiting time $T_{01}$, the object transportation time $T_{11}$ and the number P (such as 4) of necessary weight data, the thinning factor N being defined as a number which controls the response at the digital filter 10A, that is, the output interval of sampled weight signals expressed as the multiple of the sampling period $\Delta T$.

Numeral 75 indicates a filtering time calculating means for calculating the response time $T_{n1}$ of the digital filter from the thinning factor N. Numeral 76 indicates a sampling time calculating means for calculating the sampling time $T_{31}$, during which sampling can be performed. It is calculated from the detection inhibiting time $T_{01}$, the object transportation time $T_{11}$ and the response time $T_{n1}$ of the digital filter according to Equation (3) given as follows:

$$T_{31} = T_{11} - T_{01} - T_{n1} \qquad \text{Eq. (3)}$$

This is illustrated in Fig. 4. The detection inhibiting time calculating means 72, the object transportation time calculating means 73 and the thinning factor calculating means 74 constitute what is herein referred to as a data processing condition setting means 70.

With reference still to Fig. 3, numeral 77 indicates a weight data outputting means for outputting the value considered the most trustworthy of the plurality of weight data stored in the weight data memory circuit 60. Numeral 78 indicates an automatic zero-point adjustment inhibiting time calculating means for calculating a zero-point adjustment inhibiting time $T_{41}$ from the belt speed V, the length $L_m$ of the target object and the response time $T_{n1}$ of the digital filter according to Equation (4) given as follows:

$$T_{41} = (L_m/V) + T_{n1} \qquad \text{Eq. (4)}$$

The operation of the structure described above will be explained next with reference to Fig. 5 which schematically shows an example of the filtering operation by the digital filter 10A, that is, its internal functioning.

As shown in Line (II) of Fig. 5, the digital filter takes in weight signals sequentially from the load cell 5 with the sampling period of $\Delta T$ as shown in Line (I), and when a preliminarily set "tap number" (= 32 in this example) of weight signal has been taken in, the results of calculations on the weight signals which has been taken in begin to be outputted as shown in Line (III). In the next (second) stage, alternate ones of these outputted results of calculations, such as the first, the third, etc., are inputted as weight signals as shown in Line (IV). When the 32nd of them is outputted at the 94th sampling period (See Line (I)), the results of calculations on the second-stage input weight signals begin to be outputted as shown in Line (V). In the third stage, these results of the second-stage calculations are taken in at intervals of N sampling periods, where N again represents the thinning factor. Fig. 5 shows on Line (VI) a situation where the thinning factor N is 7. When the 32nd of them have been taken in, the result of calculations on the first of them is outputted as shown in Line (VII). In other words, (94 + 32 x N) sampling periods are normally required in order to obtain this calculation result. Since the output sampling frequency becomes longer as the thinning factor N is increased, the lower limit of the signal frequency which can pass through the digital filter 10A becomes lower. Accordingly, the oscillatory load from the weighing conveyor 1 and the target object M which generate high-frequency components are removed.

Before a weighing operation is started, the belt speed V and the length $L_m$ of the target objects to be weighed are inputted from the keyboard 26 shown in Fig. 3. The weighing conveyor 1 is driven thereupon by the control device 20 in accordance with the inputted data, and the detection inhibiting time calculating means 72 and the object transportation time calculating means 73 calculate the detection inhibiting time $T_{01}$ and the object transportation time $T_{11}$, respectively, outputting corresponding signals to the thinning factor calculating means 74. The thinning factor calculating means 74 calculates the thinning factor N from the fundamental sampling period $\Delta T$ (such as 0.5 millisecond) of the digital filter 10A from the detection inhibiting time $T_{01}$, the object transportation time $T_{11}$ and a preliminarily set number P (such as 4) of weight data which are required, outputting a signal corresponding to this thinning factor N to the digital filter 10A. Since $\{(94 + 32 \times N) + N \times P\} \times \Delta T = 18 \times N + 47$ is equal to $(T_{11} - T_{01})$, the thinning factor may be calculated by $N = (T_{11} - T_{01} - 47)/18$. In summary, the thinning factor calculating means 74 outputs to the digital filter 10A a signal corresponding to the largest possible value for the thinning factor N such that the number P of necessary weight data can be obtained within the sampling time $T_{31}$ during which filtering operation is allowed.

When a target object M is placed on the feed-in conveyor belt 6 under the condition described above and reaches near the front end of the weighing conveyor 1 as shown in Fig. 4, a detection signal is outputted from the object detector 7, and the control device 20 prevents the detection of the target object M for a period of time given by the detection inhibiting time $T_{01}$ from the moment when this detection signal is inputted. The purpose of this inhibiting operation is to prevent the object detector 7 from misinterpreting a single target object M, depending on its shape, as a plurality of objects as this target object M is transferred from the feed-in conveyor belt 6 onto the weighing conveyor 1. After the detection inhibiting time $T_{01}$ has elapsed and the target object M is completely on the weighing conveyor 1, the control device 20 of Fig. 3 outputs a command to the digital filter 10A to have the weight signals from the load cell 5 sampled at a constant period $\Delta T$ (0.5 millisecond).

These weight signals, thus sampled at the constant period $\Delta T$, are sequentially thinned out by the digital filter 10A by the thinning factor N determined by the control device 20 such that high-frequency components are removed from the weight signals.

After the response time $T_{n1}$ of the digital filter of Fig. 4 has elapsed and data begin to be outputted from the digital filter 10A, the control device 20 causes these weight data to be transmitted to and stored in the weight data memory circuit 60. Still after the elapse of time period $T_{31}$, which is preliminarily obtained by calculation, the control device 20 stops the sampling operations by the digital filter 10A so as to prevent weight data with low reliability from being taken in.

The weight data outputting means 77 of the control device 20 reads out a plurality of weight data stored in the weight data memory circuit 60, selects and outputs a value considered the most trustworthy of the plurality of weight data obtained during the sampling time of $T_{31}$. The value to be selected may be the highest one, the average or the value which occurs most frequently.

After the elapse of a time period equal to the zero-point adjustment inhibiting time $T_{41}$ from the moment when one target object M is discharged from the weighing conveyor 1, the automatic zero-point adjustment function for the weighing conveyor 1 is activated because the weighing conveyor 1 is now in a condition to allow such automatic zero-point adjustment. If another object to be weighed is transported onto the weighing conveyor 1 from the feed-in conveyor belt 6 when the automatic zero-point adjustment is about to be started, the adjustment is not carried out, and the control device 20 measures the weight of this object by a similar process and outputs a weight value considered to be the most trustworthy.

When the length $L_m$ of the target object to be weighed or the belt speed V of the weighing conveyor 1 is to be changed, the new value is inputted from the keyboard 26. The control device 20 calculates the detection inhibiting time $T_{01}$, the object transportation time $T_{11}$, the sampling time $T_{31}$, the thinning factor N, the response time $T_{n1}$ of the digital filter and the zero-point adjustment inhibiting time $T_{41}$ from the newly inputted value of the length $L_m$ or the belt speed V. The data processing condition setting means 70 changes the filter constants of the digital filter 10A on the basis of the new values of the detection inhibiting time $T_{01}$, the object transportation time $T_{11}$ and the thinning factor N. Thereafter, the digital filter 10A performs filtering operations under optimum conditions for the changed values of the belt speed V and the length $L_m$ of the target object.

With the belt speed V of the weighing conveyor 1 known, data on the length $L_m$ of a target object M may be obtained automatically by measuring a traveling time of the object M.

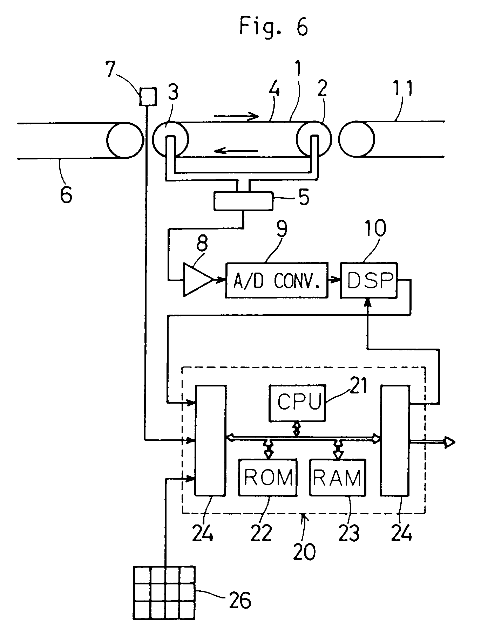

A second embodiment of the present invention is described next with reference to Figs. 6 - 8 wherein like components are generally indicated by the same numerical symbols, except the digital filter of the weighing machine shown in Figs. 6 - 8 is indicated by 10 and is composed of a digital signal processor and programmed so as to function as a low pass filter of a finite impulse response (FIR) type. The control device 20 is programmed so as to receive a signal from the object detector 7, data from the keyboard 26 (serving as data inputting means for inputting various data) and weight signals from the digital filter 10 and not only to perform various functions to be described below but also to output control parameters to the digital filter 10 and display data to a display device (not shown).

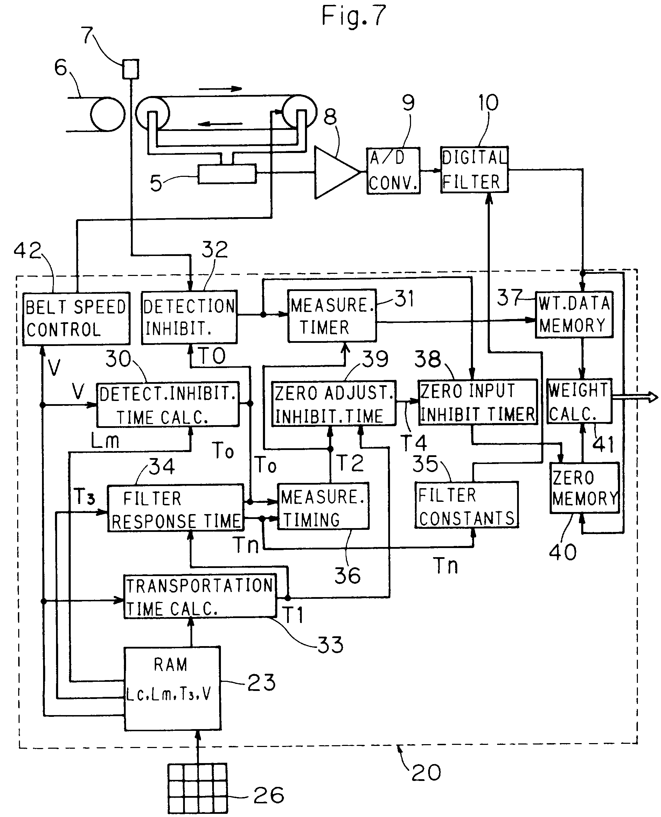

With reference next to Fig. 7 which shows the functions of the microcomputer constituting the control device 20 of Fig. 6, the RAM 23 stores the length $L_c$ of the weighing conveyor, the length $L_m$ of the target object to be weighed, the sampling time period $T_3$ during which sampling may be carried out and the belt speed V. The ROM 22 stores a program which enables the control device 20 to perform its intended functions to be described below.

With reference still to Fig. 7, numeral 30 indicates a detection inhibiting time calculating means for calculating a transportation time (as detection inhibiting time $T_0 = L_m/V$) corresponding to the length $L_m$ of the target object and outputting this value as a signal to a detection inhibiting means 32. The detection inhibiting means 32 serves to start a measurement starting timer 31 when a detection signal is received from the object detector 7 and to cause the detection signal to be ignored, although it may be repeatedly switched on and off, until a time period equal to the detection inhibiting time $T_0$ elapses from the start of the timer 31.

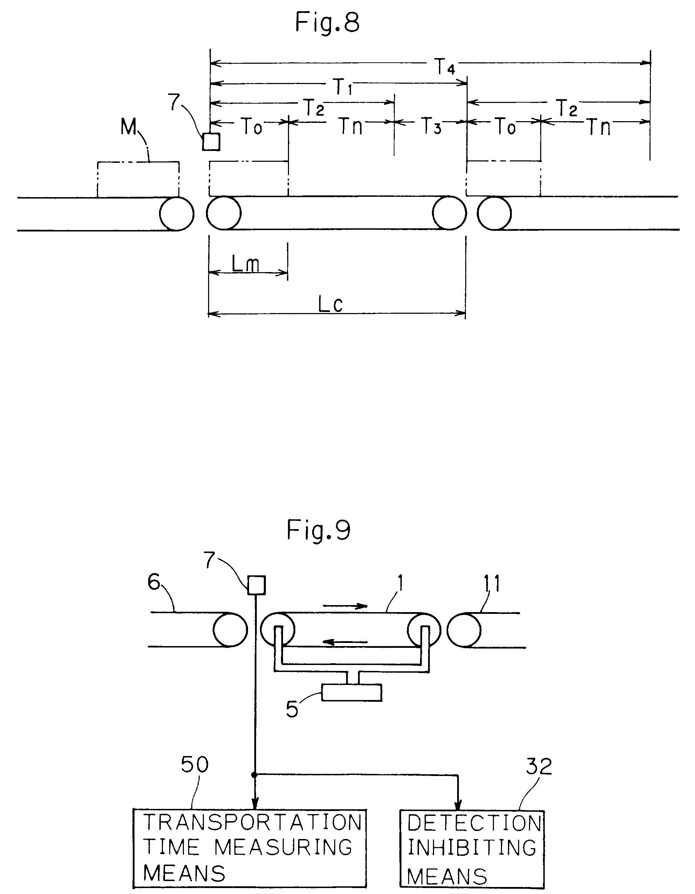

Numeral 33 indicates an object transportation time calculating means for calculating the object transportation time $T_1$ ($= L_c/V$) for the target object M on the weighing conveyor 1 from the stored values of the length $L_c$ and the belt speed V. Numeral 34 indicates a filter response time calculating means for calculating the response time $T_n$ of the digital filter 10 as shown in Fig. 8 from the calculated value of the object transportation time $T_1$, the set value of the sampling time $T_3$ and the detection inhibiting time $T_0$ as $T_n = T_1 - T_0 - T_3$. Numeral 35 indicates a filter constant calculating means for calculating filter constants from this response time $T_n$ of the digital filter and outputting them as signals to the digital filter 10 to thereby determine filter characteristics. The object transportation time calculating means 33, the filter response time calculating means 34 and the filter constant calculating means 35 constitute a data processing condition setting means. Numeral 36 indicates a measurement timing calculating means for calculating the unstable time $T_2$ between when a target object M begins to ride on the weighing conveyor 1 and when weight signals begin to be taken in. The unstable time $T_2$ may be calculated either from the response time $T_n$ of the digital filter and the detection inhibiting time $T_0$ according to the relationship $T_2 = T_n + T_0$ or from the object transportation time $T_1$ and the sampling time $T_3$ according to the relationship $T_2 = T_1 - T_3$.

The measurement starting timer 31 of Fig. 7 starts its time counting operation when the object detector 7 detects the front end of the target object M and stops it when it counts up a time period equal to the unstable time $T_2$ which has been set. Thereafter, the weight signals outputted at constant intervals from the digital filter 10 are sequentially stored in a weight data memory 37 formed on a specified area of the RAM 23.

Numeral 39 indicates an automatic zero-point adjustment inhibiting time calculating means for calculating the zero-point adjustment inhibiting time $T_4$ from the transportation time $T_1$ for the object M on the weighing conveyor 1 and the unstable time $T_2$ according to the relationship $T_4 = T_1 + T_2$ as illustrated in Fig. 8 and setting its value in another timer 38 (shown in Fig. 7) herein referred to as the zero-point input inhibiting timer. With the zero-point adjustment inhibiting time $T_4$ thus set, the zero-point input inhibiting timer 38 starts its time counting operation when the front end of the target object M to be weighed is detected by the object detector 7 and stops it after an elapse of this zero-point adjustment inhibiting time $T_4$. Thereafter, the weight signals outputted at constant intervals from the digital filter 10 are stored in another memory device 40 herein referred to as the zero-point memory.

Numeral 41 indicates a weight calculating means for calculating the net weight of the target object M by subtracting the zero-point value stored in the zero-point memory 40 from the data in the weight data memory 37. Numeral 42 indicates a belt speed control means for adjusting the transportation speeds of the weighing conveyor 1 and the feed-in conveyor belt 6 according to the inputted belt speed V.

Next, the operation of the weighing machine described above by way of Figs. 7 and 8 will be explained. First, the weighing machine is set in a registration mode from the keyboard 26, and the length $L_c$ of the weighing conveyor 1, the length $L_m$ of the target object M to be weighed, the sampling time $T_3$ during which sampling is to be allowed and, if necessary, also the belt speed V are inputted. The control device 20 causes these data to be stored on a specified area of the RAM 23 and performs certain specified calculations by using them. For example, the detection inhibiting time calculating means 30 determines a detection inhibiting time $T_0$ ($= L_m/V$) from the belt speed V and the length $L_m$ of the target object, although the detection inhibiting time $T_0$ may also be obtained as the value of $T_{01}$ was obtained by Equation (1), as explained above with reference to a different embodiment of the present invention. Similarly, the object transportation time calculating means 33 determines an object transportation time $T_1$ ($= L_c/V$) from the length $L_c$ of the weighing conveyor and the belt speed V, although the object transportation time $T_1$ may also be obtained as the value of $T_{11}$ was obtained by Equation (2). The filter response time calculating means 34 calculates $T_n = T_1 - T_0 - T_3$ to determine a response time $T_n$ for the digital filter from the object transportation time $T_1$, the sampling time $T_3$ and the detection inhibiting time $T_0$. If the filtering time is sufficiently long, however, the response time may be set shorter than the calculated value of $T_n$.

The filter constant calculating means 35 calculates filter constants from this response time $T_n$ of the digital

filter and outputs them as signals to the digital filter 10 to thereby determine filter characteristics. In this manner, the response time $T_n$ can be made longer if the length $L_m$ of the target object is small such that the digital filter 10 can be operated more effectively. In the case of a longer target object with a large value of $L_m$, on the other hand, the response time $T_n$ of the digital filter may be made shorter such that the weighing capability will not be adversely affected. A short response time $T_n$ of the digital filter may give rise to the danger of external disturbances, but sufficiently accurate weight data can be obtained as a practical matter, for example, by subjecting the weight values to a translational averaging process.

The measurement timing calculating means 36 of Fig. 7 determines the unstable time $T_2 = T_n + T_0$. The unstable time $T_2$ may also be calculated from the object transportation time $T_1$ and the sampling time $T_3$. The value of the unstable time $T_2$ thus calculated is set in the measurement starting timer 31. The belt speed control means 42 adjusts the transportation speeds of the conveyors 1, 6 and 11 according to the inputted value of the belt speed V. In applications where there is no need to change the belt speed V, the belt speed control means 42 may be absent.

When the registration is completed, the keyboard 26 is operated to change the mode of operation from the registration mode to the weighing mode. When a target object M reaches the position of the object detector 7 from the feed-in conveyor belt 6, a detection signal is outputted from the object detector 7. When this detection signal is received by the control device 20, the detection inhibiting means 32 activates the measurement starting timer 31. Until the detection inhibiting time $T_0$ elapses thereafter, that is, until the whole of the target object M passes the position of the object detector 7, all changes in the signals from the object detector 7 are ignored. Thus, it is the signal which was outputted when the front end of the target object M reached the object detector 7 that is used as the reference time for the subsequent data processing.

The digital filter 10 operates in synchronism with the analog-to-digital converter 9 to sequentially receive numerical data therefrom, to carry out filtering operations according to a specified formula by using inputted new numerical data and a row of old numerical data, and to output a result to the control device 20. The measurement starting counter 31 starts counting when the target object M is detected, stops counting when the unstable time $T_2$ shown in Fig. 8 has elapsed and stores on the weight data memory 37 the weight data outputted from the digital filter 10 of Fig. 7. The weight calculating means 41 subtracts the zero-point value stored in the zero-point memory 40 from the weight data stored in the weight data memory 37, thereby determining the net weight of the target object M and outputting its value to a display device (not shown). By the time the display is made, the target object M is already on its way to be discharged from the weighing conveyor 1.

The weighing conveyor 1 becomes unloaded as soon as the target object M is completely discharged from it, but it is not in a perfect zero-load condition until the unstable time period $T_2$ elapses because the vibrations of the conveyor 1 have not been sufficiently attenuated. In other words, the signal from the load cell 5 cannot be considered to represent a true zero-load condition. Thus, the automatic zero-point adjustment inhibiting time calculating means 39 calculates the zero-point adjustment inhibiting time $T_4$ from the object transportation time $T_1$ and the value of the unstable time $T_2$ by the relationship $T_4 = T_1 + T_2$ and sets this value in the zero-point input inhibiting timer 38. The zero-point input inhibiting timer 38 begins to count in synchronism with the measurement starting timer 31 when the front end of the target object M is detected, stops counting after the zero-point adjustment inhibiting time $T_4$ has elapsed and thereafter stores the weight signals outputted from the digital filter 10 on the zero-point memory 40. Accurate weight values can thus be obtained because the zero-point memory 40 now stores a weight signal corresponding to what may be considered a stabilized condition after the vibrations of the weighing conveyor 1 have been sufficiently attenuated.

If a next target object M is detected before the elapse of this zero-point adjustment inhibiting time $T_4$, the zero-point input inhibiting timer 38 is reset and starts its counting operation from the beginning. Thus, the zero-point is updated only when two successive target objects are transported with a longer time interval in between than the zero-point adjustment inhibiting time $T_4$. If this interval is short, the previous zero-point value is used. In this manner, variations in the zero-point of the weighing machine caused by time changes can be corrected without adversely affecting the work efficiently.

If the length $L_m$ of the target objects M to be weighed or the belt speed V is to be changed, the new value is entered from the keyboard 26. On the basis of the new value of the length $L_m$ or the belt speed V, the control device 20 calculates the detection inhibiting time $T_0$, the object transportation time $T_1$ and the response time $T_n$ for the digital filter and changes the filter constants of the digital filter 10 on the basis of these data. Thus, the digital filter 10 not only carries out its filtering operation under conditions that are optimum to the changed values of the belt speed V and the length $L_m$ but also changes the value of the zero-point adjustment inhibiting time $T_4$.

As an alternative to the embodiment of the invention described above, different values of $L_m$ may be preliminarily stored in a memory device for each kind of objects to be weighed such that the user has only to input a new call number from the keyboard 26 when it is desired to change the value of the length $L_m$. Regarding the belt speed V, it may be set at a fixed value or a speed detector may be provided to detect the speed and register its value.

Fig. 9 shows a weighing machine according to still another embodiment of the invention, characterized wherein a target object M is transported in the registration mode of operation such that the detection inhibiting time $T_0$ can be set automatically. It includes a transportation time measuring means 50 for measuring the time at which the detection signal is outputted from the object detector 7 to thereby store, as the detection inhibiting time $T_0$, the transportation time corresponding to the length $L_m$ of the target object to be weighed. This transportation time measuring means 50 is designed such that, while it is measuring the output time of a signal from the object detector 7, occurrence of OFF-conditions (that is, no-detection conditions) shorter than a specified minimum length will be ignored and hence that an accurate value of the detection inhibiting time $T_0$ can be obtained independent of the shape of the target object M.

A weighing machine according to this embodiment may also be designed such that different values of the detection inhibiting time $T_0$ are preliminarily calculated and registered for target objects of each different lengths and a right value of $T_0$ corresponding to a given target object can be called by its call number. If the detection inhibiting time $T_0$ is to be automatically set by merely transporting a target object M to be weighed, the object M is sent from the feed-in conveyor belt 6 onto the weighing conveyor 1 in the registration mode of operation. The object detector 7 outputs detection signals as long as it keeps detecting the object M. The length $L_m$ of the target object M can be determined by measuring the output time of these detection signals by the transportation time measuring means 50, and this length $L_m$ thus determined is set in the detection inhibiting means 32 as the detection inhibiting time $T_0$.

In all of the embodiments of the invention described above, data such as the belt speed V, the length $L_c$ of the weighing conveyor, the length $L_m$ of the target object to be weighed and the sampling time $T_3$ are inputted through a keyboard serving as data inputting means. Since the length $L_m$ of the target object will have to be inputted each time objects of a different size are to be weighed, it may be a practical idea to paste a scale on a structure such as a cover disposed along the travel path of the weighing conveyor such that the object M to be weighed can be placed against it to have its approximate length determined directly.

This invention is applicable to weighing machines for continuously weighing objects such as merchandises which are already weighed and packaged.

**Claims**

1. A weighing machine comprising:

   a weighing conveyor (1) having weight detecting means (5) for detecting weight and a belt (4) for transporting an object to be weighed, said belt (4) being supported by said weight detecting means (5),

   data inputting means (26) for inputting a belt speed value of said belt and a length value of said object in the direction of transportation thereof by said belt,

   belt control means (71) for controlling the speed of said belt (4) according to a belt speed value inputted by said data inputting means (26),

   condition setting means (70) for calculating optimum conditions from said belt speed value and said length value of said object in the direction of transportation thereof, and

   digital filter means (10A) for receiving control signal from said condition setting means (70) to thereby digitally filter weight signals from said weight detecting means (5).

2. The weighing machine according to claim 1, wherein said condition setting means (70) includes thinning factor calculating means (74) for calculating a thinning factor by which said weight signals are thinned by said digital filter means (10A).

3. The weighing machine according to claim 2, wherein said thinning factor calculating means (74) calculates said thinning factor from the difference between detection inhibiting time and object transportation time and a required number of weight data outputted from said weight detecting means (5), said detection inhibiting time being the time required for said object to be transported completely onto said weighing conveyor (1) from a feed-in conveyor (6), said object transportation time being the time during which said object is transported on said weighing conveyor (1).

4. The weighing machine according to any of claims 1 to 3, further comprising:

   detection inhibiting time calculating means (72) for determining a detection inhibiting time by calculating the transportation time from a length value inputted by said data inputting means (20) and a specified speed of said belt, and

   detection inhibiting means (32) for causing detection signals from said object detecting means (7) to be ignored until said detection inhibiting time elapses when said object detecting means (7) detects the front end of an object to be weighed.

5. A weighing machine comprising:

a weighing conveyor having weight detecting means for detecting weight and a belt for transporting an object to be weighed, said belt being supported by said weight detecting means,

object detecting means disposed at the object-receiving end of said weighing conveyor for detecting an object to be weighed,

detection inhibiting time setting means for measuring the output time of detection signals from said object detecting means (7) when an object to be weighed is transported onto said weighing conveyor (1) and storing said output time as detection inhibiting time corresponding to the length of said object,

detection inhibiting means for causing detection signals from said object detecting means (7) to be ignored until said detection inhibiting time elapses when said object detecting means detects the front end of an object to be weighed.

6. The weighing machine according to any of claims 1 to 5, further comprising zero-point adjustment inhibiting time calculating means (78) for calculating the zero-point adjustment inhibiting time from the length of said weighing conveyor (1), the speed of said belt, the length of said object in the direction of tranportation thereof and said filtering conditions.

**Patentansprüche**

1. Wägemaschine, mit:

einem Wägeband (1) mit Gewichtfeststellmitteln (5) zur Gewichtsfeststellung und mit einem Band (4) zum Transport eines zu wiegenden Objektes, wobei das Band (4) von den Wägefeststellmitteln (5) gestützt wird,
Dateneingabemitteln (26) zur Eingabe eines Bandgeschwindigkeitswertes des Bandes und eines sich in Transportrichtung erstreckenden Längenwertes des Objektes,
Bandsteuermitteln (71) zur Steuerung der Geschwindigkeit des Bandes (4) gemäß einem über die Dateneingabemittel (26) eingegebenen Bandgeschwindigkeitswert,
Bedingungseinstellmitteln (70) zur Errechnung optimaler Bedingungen aus dem Bandgeschwindigkeitswert und dem sich in Transportrichtung erstreckenden Längenwert des Objektes und mit
Digitalfiltermitteln (10A) zum Empfang von Steuersignalen aus den Bedingungseinstellmitteln (70), um dadurch Gewichtssignale aus dem Gewichtfeststellmitteln (5) digital zu filtern.

2. Wägemaschine nach Anspruch (1), deren Bedingungseinstellmittel (70) Ausdünnungsfaktor-Berechnungsmittel (74) zur Errechnung eines Ausdünnungsfaktors enthält, mit dem die Gewichtssignale durch die digitalen Filtermittel (10A) ausgedünnt werden.

3. Wägemaschine nach Anspruch 2, deren Ausdünnungsfaktor-Berechnungsmittel (74) den Ausdünnungsfaktor aus der Differenz zwischen der Feststellsperrzeit und der Objekttransportzeit errechnet und eine erforderliche Anzahl von Wiegedaten, die von dem Mittel zur Gewichtsfeststellung (5) ausgegeben werden, wobei die Feststellsperrzeit die für das Objekt erforderliche Zeit ist, um vollständig von einem Zuführband (6) auf das Wägeband (1) transportiert zu werden, wobei die Objekttransportzeit die Zeit ist, die das Objekt auf dem Wägeband (1) transportiert wird.

4. Wägemaschine nach einem der Ansprüche 1 bis 3, die des weiteren ausgestattet ist mit:

Feststellsperrzeit-Berechnungsmitteln (72) zur Feststellung einer Feststellsperrzeit durch Errechnung der Transportzeit aus dem über das Dateneingabemittel (20) eingegebenen Längenwert und einer spezifizierten Geschwindigkeit des Bandes und mit
Feststellsperrmitteln (32) zur Veranlassung der Feststellsignale aus dem Objektfeststellmittel (7), bis zum Ablauf der Feststellsperrzeit ignoriert zu werden, wenn das Objektfeststellmittel (7) die Vorderseite des zu wiegenden Objektes feststellt.

5. Wägemaschine, mit:

einem Wägeband mit Gewichtfeststellmitteln zur Gewichtsfeststellung und mit einem Band zum Transport eines zu wiegenden Objektes, wobei das Band von den Wägefeststellmitteln gestützt wird,
an dem Objektaufnahmeende des Wägebandes zur Feststellung eines zu wiegenden Objektes angeordneten Objektfeststellmitteln,
Feststellsperrzeit- Vorgabemittel zur Messung der Ausgabezeit von Feststellsignalen aus dem Objektfeststellmittel (7), wenn ein zu wiegendes Objekt auf das Wägeband (1) transportiert wird, und zur Speicherung der Ausgangszeit als Feststellsperrzeit entsprechend der Länge des Objektes,
Feststellsperrmitteln zur Veranlassung der Feststellsignale aus dem Objektfeststellmittel, bis zum Ablauf der Feststellsperrzeit ignoriert zu werden, wenn das Objektfeststellmittel die Vorderseite des zu wiegenden Objektes feststellt.

6. Wägemaschine nach einem der Ansprüche bis 5, die des weiteren mit Nullpunktjustage- Sperrzeitberechnungsmitteln (78) ausgestattet ist, um die Nullpunktjustagesperrzeit aus der Länge des Wägebandes (1), der Geschwindigkeit des Bandes, der Länge des Objektes in dessen Transportrichtung und deren Filterbedingungen zu errechnen.

## Revendications

1. Machine de pesée, comprenant :

   - un convoyeur de pesée (1) avec un moyen (5) de mesure du poids servant à détecter un poids et une courroie (4) servant à transporter un objet à peser, ladite courroie (4) étant supportée par ledit moyen (5) de mesure du poids,
   - un moyen (26) d'entrée de données pour entrer une valeur de la vitesse de ladite courroie et une valeur de la longueur dudit objet dans la direction de son transport par ladite courroie,
   - un moyen (71) de commande de la courroie pour régler la vitesse de ladite courroie (4) en fonction d'une valeur de la vitesse de la courroie fournie par ledit moyen (26) d'entrée de données,
   - un moyen (70) de définition des conditions pour calculer des conditions optimales à partir de ladite valeur de la vitesse de la courroie et de ladite valeur de la longueur de l'objet dans la direction de son transport, et
   - un moyen (10A) de filtrage numérique pour recevoir des signaux de commande en provenance dudit moyen (70) de définition des conditions afin de filtrer numériquement des signaux de poids provenant dudit moyen (5) de mesure du poids.

2. Machine de pesée selon la revendication 1, dans laquelle ledit moyen (70) de définition des conditions comprend un moyen (74) de calcul d'un facteur d'amincissement servant à calculer un facteur d'amincissement par lequel ledit moyen (10A) de filtrage numérique réduit lesdits signaux de poids.

3. Machine de pesée selon la revendication 2, dans laquelle ledit moyen (74) de calcul d'un facteur d'amincissement calcule ledit facteur d'amincissement à partir de la différence entre un temps d'inhibition de la détection et un temps de transport de l'objet et d'un nombre requis de données de poids émises par ledit moyen (5) de mesure du poids, ledit temps d'inhibition de la détection étant le temps nécessaire pour que ledit objet soit totalement transporté sur ledit convoyeur de pesée (1) depuis un convoyeur d'amenée (6), ledit temps de transport de l'objet étant le temps pendant lequel ledit objet est transporté sur ledit convoyeur de pesée (1).

4. Machine de pesée selon l'une quelconque des revendications 1 à 3, comprenant en outre :

   - un moyen (72) de calcul du temps d'inhibition de la détection pour déterminer un temps d'inhibition de la détection en calculant le temps de transport à partir d'une valeur de longueur entrée par ledit moyen (20) d'entrée de données et d'une vitesse spécifiée de ladite courroie, et
   - un moyen (32) d'inhibition de la détection pour faire que des signaux de détection provenant d'un moyen (7) de détection d'un objet soient ignorés jusqu'à ce que ledit temps d'inhibition de la détection soit écoulé quand ledit moyen (7) de détection d'un objet détecte l'extrémité avant d'un objet à peser.

5. Machine de pesée, qui comprend :

   - un convoyeur de pesée avec un moyen de mesure du poids servant à détecter un poids et une courroie servant à transporter un objet à peser, ladite courroie étant supportée par ledit moyen de mesure du poids,
   - un moyen de détection d'un objet placé à l'extrémité de réception des objets dudit convoyeur de pesée et servant à détecter un objet à peser,
   - un moyen de définition du temps d'inhibition de la détection servant à mesurer le temps de sortie des signaux de détection provenant dudit moyen (7) de détection d'un objet quand un objet à peser est amené sur ledit convoyeur de pesée (1) et à mémoriser ledit temps de sortie en temps que temps d'inhibition de la détection correspondant à la longueur dudit objet,
   - un moyen d'inhibition de la détection servant à faire que les signaux de détection provenant dudit moyen (7) de détection d'un objet soient ignorés jusqu'à ce que ledit temps d'inhibition de la détection soit écoulé quand ledit moyen de détection d'un objet détecte l'extrémité avant d'un objet à peser.

6. Machine de pesée selon l'une quelconque des revendications 1 à 5, comprenant en outre un moyen (78) de calcul du temps d'inhibition de réglage du point zéro pour calculer le temps d'inhibition de réglage du point zéro à partir de la longueur dudit convoyeur de pesée (1), de la vitesse de ladite courroie, de la longueur dudit objet dans la direction de son transport et desdites conditions de filtrage.

Fig. 1

Fig.2

Fig.4

## Fig.3

# Fig. 5

EP 0 507 957 B1

ΔT

1 2 3 4  31 32 33 34 35  94 95 96  100 101 102  108  318

(I) SAMPLING

(II) INPUT : STAGE 1  ① ② ③ ④ ---- ㉛ ㉜ ㉝ ㉞ ㉟ --- ㉞ ㉟ ㉟ ----- ⑩⑩ ⑩ ⑩ ⑩ ⑱

(III) OUTPUT : STAGE 1  ① ② ③ ㉟ --- ㊿ ㊿ ㊿ --- ㊿ ⑦⑩ ⑦ ⑦ ②⑱

(IV) INPUT : STAGE 2  ① ② ---- ㉜ ㉝ --- ㉟ ㊱ ------ ㊳ ⑭

(V) OUTPUT : STAGE 2  ① ② --- ④ ⑤ --- ⑧ ⑬

(VI) INPUT : STAGE 3  ① ② ③ --- ㉜

(VII) OUTPUT : STAGE 3  ①

Fig. 6

## Fig.7

## Fig.8

## Fig.9

| TRANSPORTATION TIME MEASURING MEANS | DETECTION INHIBITING MEANS |
|---|---|